# EUROPÄISCHE PATENTANMELDUNG

(11) **EP 1 077 342 A1**
(43) Veröffentlichungstag der Anmeldung: **21.02.2001**
(21) Anmeldenummer: 00115806.2
(22) Anmeldetag: 22.07.2000
(51) Int. Cl.: F16L 17/04

(54) **Vorrichtung zum Anzeigen des Erreichens des Sollwerts der Spannkraft einer spannbaren Schelle**

(30) Priorität: 14.08.1999 DE 19938606
(71) Anmelder: Rasmussen GmbH, D-63477 Maintal (DE)
(72) Erfinder: Barbett, Wolfgang, 46414 Rhede (DE); Scheit, Peter, 60488 Frankfurt am Main (DE)
(74) Vertreter: Knoblauch, Ulrich, Dr.

(57) **Zusammenfassung**

Eine Vorrichtung zum Anzeigen des Erreichens des Sollwerts der Spannkraft einer spannbaren Schelle, die ein C-förmiges Schellenband (1) mit an seinen axialen Enden nach innen ragenden Stirnwänden (2) und mit zusammenziehbaren Spannbacken aufweist, hat für jede Stirnwand (2) wenigstens ein etwa H-förmiges Anzeigeelement (22), das auf dem radial inneren Rand der Stirnwand (2) aufsetzbar ist und in der Einbaulage des Anzeigeelements (22) beim Erreichen des Sollwerts der Spannkraft der Schelle und eines vorbestimmten Abstands des inneren Randes der Stirnwand (2) von einem in der Schelle eingespannten zylindrischen Gegenstand (3) zerbricht. Dadurch wird erreicht, daß die durch das Zerbrechen bewirkte Anzeige mit höherer Zuverlässigkeit und Genauigkeit dem Sollwert der Spannkraft und dem Erreichen der gewünschten oder zulässigen Verpressung einer gegebenenfalls vorhandenen elastomeren Manschette (15) der Schelle entspricht.

## Beschreibung

Die Erfindung bezieht sich auf eine Vorrichtung zum Anzeigen des Erreichens des Sollwerts der Spannkraft einer spannbaren Schelle, die ein etwa C-förmig gebogenes Schellenband mit an seinen axialen Enden nach innen ragenden Stirnwänden und mit Spannbacken an sich in Umfangsrichtung erstreckenden Endabschnitten aufweist.

Bei bekannten Schellen dieser Art (DE 198 02 676 C1), die zum Beispiel als Rohrkupplung zum axialen Verbinden zweier Rohre verwendet werden, sind die Spannbacken durch wenigstens eine Spannschraube verbunden, die durch einen Drehmomentschlüssel angezogen wird, um die Schelle mit einer vorbestimmten Kraft zu spannen. Das am Drehmomentschlüssel eingestellte Drehmoment ist jedoch nicht in allen Fällen ein genaues Maß für den Sollwert der Spannkraft. Wenn die Schrauben beispielsweise eingefettet oder mit einer Unterlegscheibe versehen sind oder unterschiedliche Beschichtungen aufweisen, ergeben sich unterschiedliche radiale Spannkräfte der Schelle, die zu unterschiedlichen Montage- und Betriebsergebnissen führen können.

Der Erfindung liegt die Aufgabe zugrunde, eine Anzeigevorrichtung der eingangs genannten Art anzugeben, deren Anzeige mit höherer Zuverlässigkeit und Genauigkeit dem Sollwert der Spannkraft der Schelle entspricht.

Erfindungsgemäß ist diese Aufgabe dadurch gelöst, daß die Anzeigevorrichtung für jede Stirnwand des Schellenbands wenigstens ein zerbrechliches Anzeigeelement aufweist, das auf den radial inneren Rand der Stirnwand aufsetzbar ist und in der Einbaulage des Anzeigeelemente beim Erreichen des Sollwerts der Spannkraft der Schelle und eines vorbestimmten Abstands des inneren Randes der Stirnwand von einem in der Schelle eingespannten zylindrischen Gegenstand zerbricht.

Bei dieser Lösung zerbrechen die Anzeigeelemente beim Erreichen des Sollwerts der Spannkraft der Schelle unabhängig von etwaigen Durchmessertoleranzen des eingespannten Gegenstands, z.B. Rohres, oder der Oberflächenbeschaffenheit der verwendeten Spannschraube oder Spannschrauben. Das Zerbrechen der Anzeigeelemente stellt dann bei der Montage der Schelle ein auffälliges Anzeichen für das Erreichen der gewünschten Spannkraft und damit auch für das Erreichen der zulässigen oder gewünschten Verpressung einer gegebenenfalls in der Schelle verwendeten Dichtungs- oder Schalldämpfungsmanschette dar.

Im einzelnen kann dafür gesorgt sein, daß jedes Anzeigeelement ein etwa U-förmiges Teil und einen zu dem einen Schenkel seiner beiden Schenkel entgegengesetzt gerichteten und mit dem einen Schenkel fluchtenden ersten Stützschenkel zur Abstützung an dem in der Schelle eingespannten zylindrischen Gegenstand aufweist, wobei die Stirnwand zwischen den beiden Schenkeln des U-förmigen Teils eingreift, die Länge des Stützschenkels (26) gleich dem vorbestimmten Abstand gewählt ist und das die Schenkel des U-förmigen Teils verbindende Querteil eine Bruchfestigkeit aufweist, die in der Einbaulage des Anzeigeelements beim Erreichen des Sollwerts der Spannkraft der Schelle überschritten wird. Hierbei drückt die mit dem Anzeigeelement versehene Stirnwand beim Spannen der Schelle auf das Querteil, während sich das Anzeigeelement mit dem Stützschenkel an dem eingespannten Gegenstand abstützt, bis das Querteil bei dem durch die Wahl der Bruchfestigkeit des Querteils bestimmten Sollwert der Spannkraft zerbricht.

Alternativ kann dafür gesorgt sein, daß das U-förmige Teil einen zu dem anderen Schenkel des U-förmigen Teils entgegengesetzt gerichteten und mit dem anderen Schenkel fluchtenden zweiten Stützschenkel mit einer dem Abstand entsprechenden Länge zur Abstützung an dem zylindrischen Gegenstand aufweist und die Stirnwand mit Spiel zwischen den beiden Schenkeln des U-förmigen Teils eingreift.

Vorzugsweise sind die Stützschenkel des Anzeigeelements zu ihrem freien Ende hin und axial nach außen zugespitzt. Auf diese beim Spannen sich auf dem zylindrischen Gegenstand abstützenden zugespitzten Enden der Schenkel des Anzeigeelements wird dann beim Spannen ein Biegemoment im Sinne einer Spreizung dieser Schenkel ausgeübt, das das Zerbrechen des Querteils unterstützt, so daß der Bruch bei einem sehr genau definierten Wert der Spannkraft auftritt.

Der in der Einbaulage auf der axial äußeren Seite der Stirnwand liegende Schenkel des U-förmigen Teils des Anzeigeelements bildet vorzugsweise einen Teil eines C-förmigen Rings, der an der Stirnwand anliegt. Durch diesen Ring ist es möglich, das Anzeigeelement auf seiten des Herstellers der Schelle vorzumontieren, so daß die Montage des Anzeigeelements an der Einbaustelle entfällt. Beim Erreichen des Sollwerts der Spannkraft fällt dann nicht nur wenigstens ein Bruchstück des Anzeigeelements, sondern auch der C-förmige Ring von der Schelle ab. Dies stellt ein noch deutlicheres Anzeichen für das Erreichen der Spannkraft dar.

Ferner kann der C-förmige Ring in der Einbaulage axial nach innen ragende, über den Umfang verteilte Vorsprünge aufweisen, die am radial inneren Rand der Stirnwand anliegen. Diese Vorsprünge verhindern zusätzlich zu dem Anzeigeelement eine radiale Verschiebung des Rings in seiner Ebene, wenn er in dieser Ebene durch Kräfte beaufschlagt wird, z.B. beim Transport der Schelle zusammen mit dem Ring, die nicht in einer Richtung wirken, in der das Anzeigeelement die Verschiebung verhindert. Zusätzlich kann der Ring in der Einbaulage einen axial nach innen in ein Loch der Stirnwand eingreifenden Vorsprung aufweisen. Dadurch wird auch eine Verdrehung des Rings verhindert, so daß er eine vorbestimmte Drehwinkellage relativ zu der Schelle beibehält, vorzugsweise so, daß sich der Spalt zwischen seinen Enden mit dem Spalt zwischen den Spannbacken deckt und bei einer radialen Montage der Schelle auf einem Rohr das Rohr durch beide Spalte hindurchgeführt werden kann.

Sodann kann dafür gesorgt sein, daß der in der Einbaulage auf der Innenseite der Stirnwand liegende Schenkel des U-förmigen Teils des Anzeigeelements auf seiner der Stirnwand abgekehrten Seite eine bis zum freien Ende des Schenkels reichende schräge Fläche aufweist. Dies erleichtert das Montieren der C-förmigen Ringe mit den Anzeigeelementen.

Vorzugsweise sind für jede Stirnwand zwei Anzeigeelemente vorgesehen. Dadurch lassen sich größere Sollwerte der Spannkraft bei größerem Durchmesser der einzuspannenden bzw. zu verbindenden zylindrischen Gegenstände, insbesondere Rohre, abdecken.

Wenn die beiden Anzeigeelemente sich in der Einbaulage diametral in bezug auf die Schellenachse gegenüberliegen, ergibt sich ferner eine gleichmäßigere Verteilung der Spannkraft auf die Anzeigeelemente.

Die Erfindung und ihre Weiterbildungen werden im folgenden anhand eines bevorzugten Ausführungsbeispiels in Verbindung mit der Zeichnung näher beschrieben. Hierin zeigen:
- Fig. 1: eine Seitenansicht einer als Rohrkupplung dienenden Schelle mit einer erfindungsgemäßen Anzeigevorrichtung,
- Fig. 2: einen Axialschnitt durch die Schelle nach Fig. 1,
- Fig. 3: einen Axialschnitt durch die Schelle nach Fig. 1 bei in die Schelle eingesetzten Endabschnitten zweier zu verbindender Rohre,
- Fig. 4: einen Ausschnitt von Teilen der Fig. 3 in vergrößertem Maßstab,
- Fig. 5: eine axiale Außenansicht eines C-förmigen Rings der Anzeigevorrichtung,
- Fig. 6: eine axiale Innenansicht des Rings nach Fig. 5,
- Fig. 7: den Schnitt VII-VII der Fig. 5,
- Fig. 8: den in Fig. 7 eingekreisten Ausschnitt in vergrößertem Maßstab und
- Fig. 9: den IX-IX der Fig. 5.

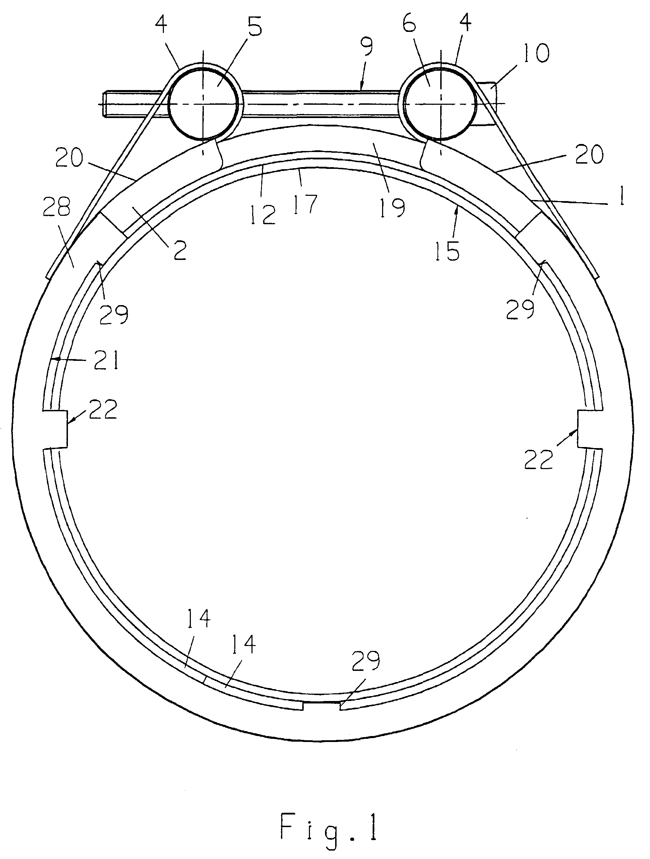

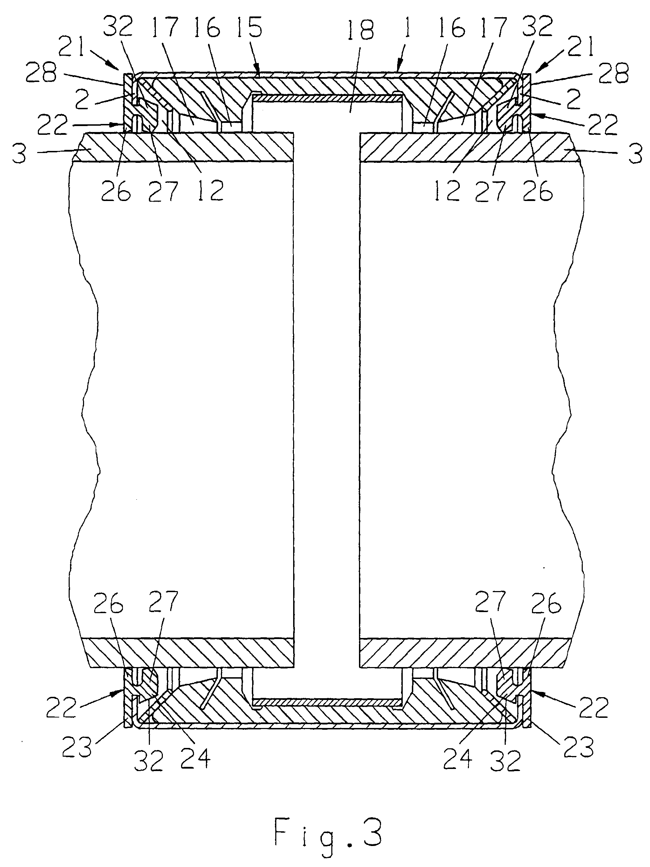

Die in den Fig. 1 bis 3 dargestellte Schelle dient als Rohrkupplung und ist wie folgt ausgebildet: Ein nicht vollständig zu einem Ring aus Stahlblech gebogenes Schellenband 1 hat an seinen axialen Enden radial nach innen umgebogene Stirnwände 2, deren Innendurchmesser größer als der axial zu verbindender glatter Rohre 3 (Fig. 3) ist. Das Schellenband 1 ist in Umfangsrichtung unterbrochen und an den die Unterbrechung begrenzenden Enden mit Spannbacken 4 (Fig. 1) versehen, die in Form einer Schlaufe des Schellenbands 1 um jeweils einen axialen Rundbolzen 5 bzw. 6 auf der Außenseite der Schellenbands 1 herumgebogen und an dieser durch Buckelschweißungen befestigt sind. Die Schlaufen der Spannbacken 4 haben jeweils zwei sich teilweise um die Rundbolzen 5, 6 herum erstreckende Schlitze. Der Rundbolzen 6 hat im Bereich der Schlitze jeweils eine radial durchgehende Bohrung ohne Innengewinde. Der Rundbolzen 5 hat im Bereich jedes Schlitzes der anderen Schlaufe ebenfalls eine radial durchgehende Bohrung, jedoch mit Innengewinde. Die Schlitze in den Schlaufen und die radialen Bohrungen der Rundbolzen 5, 6 sind jeweils von einer Spannschraube 9 durchsetzt, deren Kopf 10 einen Innenmehrkant aufweist und an einer Schulter einer die Durchgangsbohrung des Rundbolzens 6 erweiternden Sackbohrung anliegt.

An der Innenseite der Biegekante der Stirnwände 2 des Schellenbands 1 liegt die radial äußere Kante jeweils eines kegelstumpfförmigen, einmal in Umfangsrichtung unterbrochenen Rings 12 an. Die Ringe 12 sind aus einem Metallband geformt. An ihrem radial inneren Rand haben die Ringe 12 verhältnismäßig scharfe Kanten oder sind sie mit in der Ebene des Metallbands liegenden Zähnen versehen. Die Endabschnitte 14 (Fig. 1) jedes Rings 12 überlappen sich in Umfangsrichtung.

An der Innenseite des Schellenbands 1 liegt eine Dichtungsmanschette 15 aus elastomerem Material mit radial nach innen an jedem axialen Ende vorstehenden Dichtlippen 16, 17 an. Die Dichtlippen 16, 17 liegen an den Rohren 3 außen an, wenn die Rohre 3 gemäß Fig. 3 in die Rohrkupplung eingeführt und eingespannt sind. Zwischen den Dichtlippen 16 liegt an der Innenseite der Dichtungsmuffe 15 ein aus einem Blechstreifen geformter Ring 18 an, der einmal in Umfangsrichtung unterbrochen ist und dessen Endabschnitte sich in Umfangsrichtung ebenfalls überlappen. Der Ring 18 stellt sicher, daß das Material der Dichtungsmanschette 15 beim Spannen der Rohrkupplung nicht zwischen die Enden der Rohre 3 gedrückt wird.

Die Unterbrechung des Schellenbands 1 zwischen den Spannbacken 4 ist durch eine Brücke 19 überbrückt, die am Umfang der Dichtungsmanschette 15 anliegt und von den Endabschnitten 20 überlappt wird, wobei die Brücke 19 an der Innenseite eines der Endabschnitte 20 mittels Punktschweißungen angeschweißt ist.

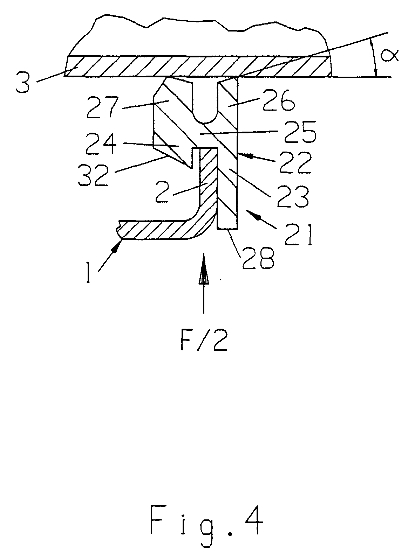

Die Schelle ist mit einer Vorrichtung 21 zum Anzeigen des Erreichens des Sollwerts der Spannkraft F (Fig. 4) der Schelle und der gewünschten oder zulässigen Verpressung der Dichtungsmanschette 15 versehen. Die Anzeigevorrichtung 21 weist für jede Stirnwand 2 des Schellenbands 1 zwei etwa H-förmige Anzeigeelemente 22 auf. Die Anzeigeelemente 22 weisen jeweils ein etwa U-förmiges Teil mit zwei Schenkeln 23 und 24 und einem diese Schenkel 23, 24 verbindenden Querteil 25 auf und sind auf den radial inneren Rand der Stirnwand 2 aufsetzbar. Dabei greift die Stirnwand 2 zwischen den Schenkeln 23, 24 jedes Anzeigeelements 22 mit Spiel ein, vgl. insbesondere Fig. 4. Das die Schenkel 23, 24 verbindende Querteil 25 des Anzeigeelements 22 hat eine Bruchfestigkeit, die in der Einbaulage des Anzeigeelements 22 beim Erreichen des Sollwerts der Spannkraft F der Schelle überschritten wird.

Jedes Anzeigeelement 22 hat ferner zwei in der dargestellten Einbaulage radial innen liegende Stützschenkel 26, 27, die beide zu ihrem freien Ende hin und axial nach außen unter einem Winkel α von etwa 10 bis 25°, vorzugsweise etwa 15 bis 18°, im dargestellten Beispiel 17°, zugespitzt sind. Die Stützschenkel 26, 27 stützen die Schelle vor dem Spannen an den Rohren 3 ab. Die Länge dieser Stützschenkel 26, 27 ist so gewählt, daß sie einem vorbestimmten Abstand der radial inneren Ränder der Stirnwände 2 von den Rohren 3 entspricht, bei dem der Sollwert der Spannkraft der Schelle und die zulässige oder gewünschte Verpressung der Dichtungsmanschette 15 erreicht ist, wenn die Schelle gespannt wird.

Der in der Einbaulage auf der axial äußeren Seite der Stirnwand 2 liegende Schenkel 23 jedes Anzeigeelements 22 bildet einen Teil eines C-förmigen Rings 28, der an der Stirnwand 2 des Schellenbands 1 anliegt.

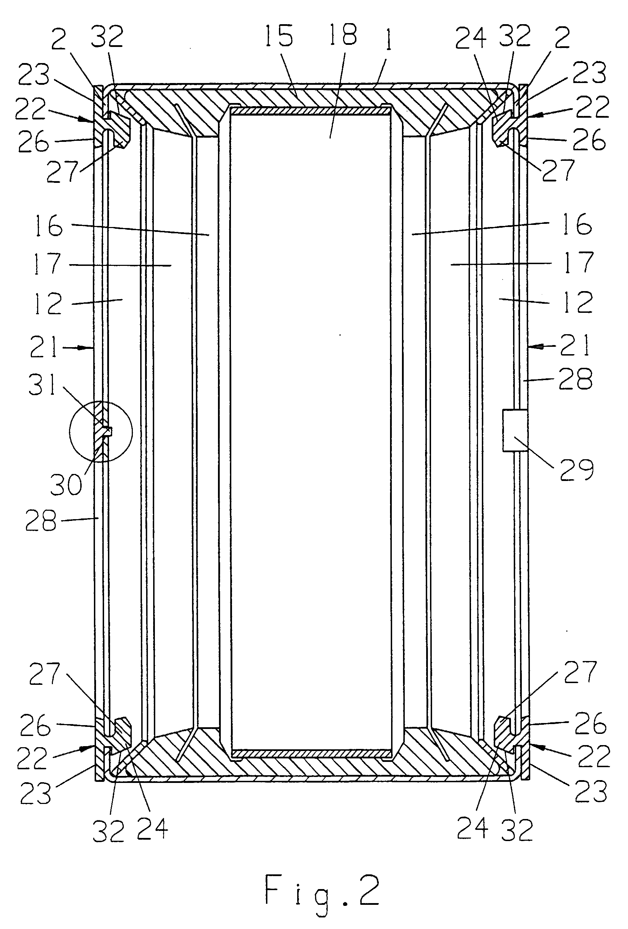

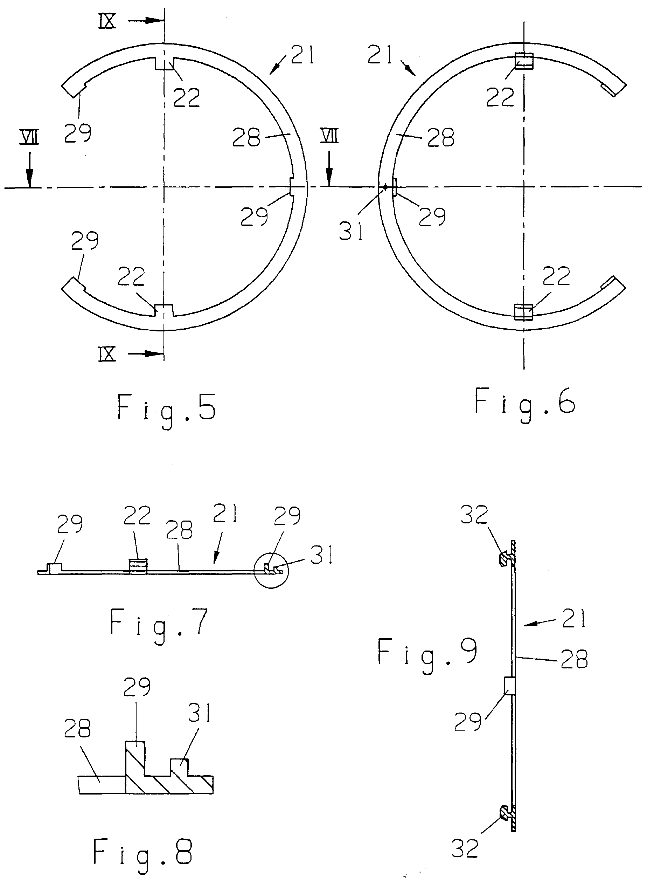

Der Ring 28 hat über den Umfang verteilte Vorsprünge 29, die in der Einbaulage axial nach innen ragen und am radial inneren Rand der Stirnwand 2 anliegen. Der Ring 28 hat einen in der Einbaulage axial nach innen in ein Loch 30 (siehe den aufgebrochenen, in Fig. 2 eingekreisten Bereich) eingreifenden Vorsprung 31 (Fig. 1 und 6 bis 8).

Der auf der Innenseite der Stirnwand 2 liegende Schenkel 24 jedes Anzeigeelements 22 hat auf seiner der Stirnwand 2 abgekehrten Seite eine bis zum freien Ende des Schenkels 24 ragende schräge Fläche 32 (Fig. 2 bis 4 und 9).

Die Anzeigevorrichtung 21 besteht aus Kunststoff, vorzugsweise Polystyrol, oder spröden Materialien und wird durch den Hersteller der Schelle nach dem Einbau der Dichtungsmanschette 15, des Rings 18 und der Ringe 12 im Schellenband 1 vormontiert. Dabei werden die Ringe 28 jeweils von der Außenseite einer der Stirnwände 2 her gegen die Stirnwände 2 gedrückt, wobei die radial inneren Ränder der Stirnwände 2 über die schrägen Flächen 32 der Schenkel 24 hinweggleiten und zwischen den Schenkeln 23 und 24 einrasten. In der Drehwinkellage der Anzeigevorrichtung 21 nach Fig. 1 relativ zur Schelle greifen die Vorsprünge 31 der Ringe 28 jeweils in eines der Löcher 30 in den Stirnwänden 2 ein. Durch den Eingriff der Stirnwände 2 in die Nut zwischen den Schenkeln 23 und 24 ist die axiale Lage der Ringe 28 an der Schelle und durch den Eingriff der Vorsprünge 31 in die Löcher 30 die Drehwinkellage der Ringe 28 relativ zur Schelle gesichert. Gleichzeitig mit dem Einsetzen der Ringe 28 in die Stirnwände 2 legen sich die Vorsprünge 29 am radial inneren Rand der Stirnwände 2 an, so daß die Ringe 28 in ihrer Radialebene nicht verschiebbar sind.

Am Einbauort der Schelle werden die Rohre 3 axial in die Schelle eingeführt, wie es in Fig. 3 dargestellt ist. Danach werden die Spannschrauben 9 angezogen, wobei die Stirnwände 2 eine Kraft F gemäß Fig. 4 auf die Querteile 25 der Anzeigeelemente 22 ausüben. Die Kraft F verteilt sich auf die sich an der Umfangsfläche der Rohre 3 mit ihren Spitzen oder Kanten abstützenden Stützschenkel 26 und 27 der Anzeigeelemente 22. Durch die Kraft F und die auf die Stützschenkel 26, 27 einwirkenden Reaktionskräfte wird auf jedes Querteil 25 ein Biegemoment ausgeübt, das in dem Augenblick, in dem die Spannkraft F die Summe der entsprechend dem Sollwert der Spannkraft bemessenen Bruchfestigkeiten oder Biegefestigkeiten der Querteile 25 überschreitet, zum Bruch der Querteile aller Anzeigeelemente 22 führt, wobei die Festigkeit jedes Querteils 25 einem der Anzahl der Anzeigeelemente 22 entsprechenden Bruchteil der Spannkraft F entspricht. Dies hat zur Folge, daß die Ringe 28 axial nach außen von der Schelle wegspringen, was ein auffälliges Anzeichen dafür ist, daß der Sollwert der Spannkraft erreicht ist. Danach werden die Spannschrauben 9 nicht fester angezogen. Vorzugsweise sind die Ringe 28 im Vergleich zum Schellenband 1 unterschiedlich gefärbt, vorzugsweise mit einer auffälligen Farbe, so daß sie leicht von der Schelle zu unterscheiden sind. Nachdem sie von der Schelle weggebrochen sind, können sie von den Rohren 3 abgenommen werden, sofern sie nicht von selbst herabfallen.

Durch die im Winkel α zugespitzten Enden der Stützschenkel 26, 27 stützen sich die Stützschenkel 26, 27 relativ weit axial außerhalb der Mitte des betreffenden Querteils 25 am betreffenden Rohr 3 ab, so daß sie beim Spannen bestrebt sind, sich zu spreizen, und ein entsprechend höheres Biegemoment auf das Querteil 25 ausüben. Die Querteile 25 der Anzeigeelemente 22 zerbrechen daher bei einer verhältnismäßig genau definierten Spannkraft F und dem durch entsprechende Wahl der Länge der Stützschenkel 26, 27 vorbestimmten Abstand zwischen den inneren Rändern der Stirnwände 2 und der Rohre 3, was zugleich dem Erreichen einer zulässigen oder gewünschten Verpressung der Dichtungsmanschette 15 entspricht.

Abwandlungen des dargestellten Ausführungsbeispiels können beispielsweise darin bestehen, daß jeder Ring 28 mit nur einem Anzeigeelement 22 versehen wird. Die Verwendung zweier, insbesondere sich diametral gegenüberliegender, Anzeigeelemente 22 hat jedoch den Vorteil, daß sich größere Sollwerte der Spannkräfte entsprechend der Summe der Bruchfestigkeiten der Querteile 25 aller Anzeigeelemente 22 für größere Durchmesser der Rohre 3 wählen lassen. Ferner könnten auch die Ringe 28 entfallen, so daß nur ein oder zwei H-förmige Anzeigeelemente 22 auf dem radial inneren Rand jeder Stirnwand 2 aufgesetzt würde(n). Die die H-förmigen Anzeigeelemente 22 verbindenden Ringe 28 haben jedoch den Vorteil, daß die Anzeigeelemente 22 auf seiten des Herstellers der Schelle einfacher und sicherer vormontiert werden können. Darüber hinaus ist es möglich, die Schenkel 27 der Anzeigeelemente 22 wegzulassen, so daß sich das U-förmige Teil, bestehend aus den Schenkeln 23 und 24 und dem Querteil 25 nur mit dem mit dem Schenkel 23 fluchtenden Stützschenkel 26 am betreffenden Rohr 3 abstützt.

Statt einzelne Anzeigeelemente 22 durch den Ring 28 zu verbinden, kann auf jeden der inneren Ränder der Stirnwände 2 als Anzeigeelement ein C-förmiger, d.h. offener Ring aufgesetzt werden, dessen radialer Querschnitt über seinen gesamten Umfang dem eines der Anzeigeelemente 22 entspricht.

Statt bei einer Rohrkupplung können die dargestellte Anzeigevorrichtung 21 oder die beschriebenen Abwandlungen auch bei einer Schelle zur Befestigung eines Rohres oder anderen zylindrischen Gegenstands, z.B. eines Kabels, an einer Gebäudewand oder dergleichen verwendet werden, wobei eine solche Befestigungsschelle anstelle einer Dichtungs- eine elastomere Schalldämpfungsmanschette aufweisen kann. Bei beiden Schellenarten können auch die Ringe 12 entfallen.

## Patentansprüche

1. Vorrichtung zum Anzeigen des Erreichens des Sollwerts der Spannkraft einer spannbaren Schelle, die ein etwa C-förmig gebogenes Schellenband (1) mit an seinen axialen Enden nach innen ragenden Stirnwänden (2) und mit Spannbacken (4) an sich in Umfangsrichtung erstreckenden Endabschnitten (20) aufweist, dadurch gekennzeichnet, daß die Anzeigevorrichtung (21) für jede Stirnwand (2) des Schellenbands (1) wenigstens ein zerbrechliches Anzeigeelement (22) aufweist, das auf den radial inneren Rand der Stirnwand (2) aufsetzbar ist und in der Einbaulage des Anzeigeelements (22) beim Erreichen des Sollwerts der Spannkraft der Schelle und eines vorbestimmten Abstands des inneren Randes der Stirnwand (2) von einem in der Schelle eingespannten zylindrischen Gegenstand (3) zerbricht.

2. Vorrichtung nach Anspruch 1, dadurch gekennzeichnet, daß jedes Anzeigeelement (22) ein etwa U-förmiges Teil (23, 24-25) und einen zu dem einen Schenkel (23) seiner beiden Schenkel (23, 24) entgegengesetzt gerichteten und mit dem einen Schenkel (23) fluchtenden ersten Stützschenkel (26) zur Abstützung an dem in der Schelle eingespannten zylindrischen Gegenstand (3) aufweist, wobei die Stirnwand (2) zwischen den beiden Schenkeln (23, 24) des U-förmigen Teils eingreift, die Länge des Stützschenkels (26) gleich dem vorbestimmten Abstand gewählt ist und das die Schenkel (23, 24) des U-förmigen Teils verbindende Querteil (25) eine Bruchfestigkeit aufweist, die in der Einbaulage des Anzeigeelements (22) beim Erreichen des Sollwerts der Spannkraft (F) der Schelle überschritten wird.

3. Vorrichtung nach Anspruch 2, dadurch gekennzeichnet, daß das U-förmige Teil einen zu dem anderen Schenkel (24) des U-förmigen Teils entgegengesetzt gerichteten und mit dem anderen Schenkel (24) fluchtenden zweiten Stützschenkel (27) mit einer dem Abstand entsprechenden Länge zur Abstützung an dem zylindrischen Gegenstand (3) aufweist und die Stirnwand (2) mit Spiel zwischen den beiden Schenkeln (23, 24) des U-förmigen Teils eingreift.

4. Vorrichtung nach Anspruch 2 oder 3, dadurch gekennzeichnet, daß die Stützschenkel (26, 27) zu ihrem freien Ende hin und axial nach außen zugespitzt sind.

5. Vorrichtung nach einem der Ansprüche 2 bis 4, dadurch gekennzeichnet, daß der in der Einbaulage auf der axial äußeren Seite der Stirnwand (2) liegende Schenkel (23) des U-förmigen Teils des Anzeigeelements (22) einen Teil eines C-förmigen Rings (28) bildet, der an der Stirnwand (2) anliegt.

6. Vorrichtung nach Anspruch 5, dadurch gekennzeichnet, daß der Ring (28) in der Einbaulage axial nach innen ragende, über den Umfang verteilte Vorsprünge (29) aufweist, die am radial inneren Rand der Stirnwand (2) anliegen.

7. Vorrichtung nach Anspruch 5 oder 6, dadurch gekennzeichnet, daß der Ring (28) in der Einbaulage einen axial nach innen in ein Loch (30) der Stirnwand (2) eingreifenden Vorsprung (31) aufweist.

8. Vorrichtung nach einem der Ansprüche 5 bis 7, dadurch gekennzeichnet, daß der in der Einbaulage auf der Innenseite der Stirnwand (2) liegende Schenkel (24) des U-förmigen Teils des Anzeigeelements (22) auf seiner der Stirnwand (2) abgekehrten Seite eine bis zum freien Ende des Schenkels (24) reichende schräge Fläche (32) aufweist.

9. Vorrichtung nach einem der Ansprüche 1 bis 6, dadurch gekennzeichnet, daß für jede Stirnwand (2) zwei Anzeigeelemente (22) vorgesehen sind.

10. Vorrichtung nach Anspruch 9, dadurch gekennzeichnet, daß die beiden Anzeigeelemente (22) sich in der Einbaulage diametral in bezug auf die Schellenachse gegenüberliegen.
